# EUROPEAN PATENT APPLICATION

(11) **EP 4 571 500 A1**
(43) Date of publication of application: **18.06.2025**
(21) Application number: 22954678.3
(22) Date of filing: 12.08.2022
(51) Int. Cl.: G06F 9/448, G06F 21/62

(54) **AUTHORIZATION REVOCATION METHOD AND APPARATUS, AND STORAGE MEDIUM**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Dehns Germany Partnerschaft mbB
(86) International application number: PCT/CN2022/112332
(87) International publication number: WO 2024/031730

(57) **Abstract**

The present disclosure provides an authorization revocation method and apparatus, and a storage medium. The authorization revocation method comprises: sending to a general API architecture CAPIF authentication authorization function a first revocation request message for requesting to revoke a specified authorization, wherein the specified authorization is an authorization corresponding to a target resource of a UE; and receiving a first revocation response message returned by the CAPIF authentication authorization function, wherein the first revocation response message is used for indicating that revocation of the specified authorization has been completed. In the present disclosure, the revocation of the specified authorization can be initiated by the UE, so that the objective of enabling user authorization revocation in the invocation process of an API is achieved, and the availability is high.

## Description

### TECHNICAL FIELD

The present disclosure relates to the field of communications, and more particularly, to a method and apparatus for authorization revocation, and a storage medium.

### BACKGROUND

One of the objectives of the study on Subscriber-aware Northbound API access (SNA) Application (SNAAPP) security is about obtaining authorization from the resource owner. Current regulations allow the UE to provide and/or revoke consent for information (e.g., location, presence) to be shared with the third-party. In addition, in SNA scenarios, the Application Program Interface (API) invoker may request consent for obtaining or setting resources (e.g., location, presence) that is owned by itself. However, there is no existing mechanism to enable user authorization revocation in API invocation scenarios.

### SUMMARY

In order to overcome problems in the related arts, embodiments of the present disclosure provide a method and apparatus for authorization revocation, and a storage medium.

According to a first aspect of embodiments of the present disclosure, there is provided a method for authorization revocation, which is performed by a User Equipment (UE). The method includes:

sending a first revocation request message to a Common API Framework (CAPIF) authentication/authorization function, wherein the first revocation request message is configured to request revocation of a specified authorization, and the specified authorization is an authorization corresponding to a target resource of the UE; and

receiving a first revocation response message returned by the CAPIF authentication/authorization function, wherein the first revocation response message is configured to indicate that the revocation of the specified authorization has been completed.

According to a second aspect of embodiments of the present disclosure, there is provided a method for authorization revocation, which is performed by an API invoker. The method includes:
receiving a second revocation request message sent by a Common API Framework (CAPIF) authentication/authorization function, wherein the second revocation request message is configured to request revocation of a specified authorization, and the specified authorization is an authorization corresponding to a target resource of a User Equipment (UE);
deleting, based on the second revocation request message, authorization information corresponding to the target resource; and
sending a second revocation response message to the CAPIF authentication/authorization function, wherein the second revocation response message is configured to indicate that the authorization information has been deleted by the API invoker.

According to a third aspect of embodiments of the present disclosure, there is provided a method for authorization revocation, which is performed by an API Exposing Function (AEF). The method includes:
receiving a third revocation request message sent by a Common API Framework (CAPIF) authentication/authorization function, wherein the third revocation request message is configured to request revocation of a specified authorization, and the specified authorization is an authorization corresponding to a target resource of a User Equipment (UE);
storing the third revocation request message; and
sending a third revocation response message to the CAPIF authentication/authorization function, wherein the third revocation response message is configured to indicate that the third revocation request message has been stored by the AEF.

According to a fourth aspect of embodiments of the present disclosure, there is provided a method for authorization revocation, which is performed by a Common API Framework (CAPIF) authentication/authorization function. The method includes:
receiving a first revocation request message sent by a User Equipment (UE), wherein the first revocation request message is configured to request revocation of a specified authorization, and the specified authorization is an authorization corresponding to a target resource of the UE;
sending a second revocation request message to an API invoker, and sending a third revocation request message to an API Exposing Function (AEF);
receiving a second revocation response message returned by the API invoker, and receiving a third revocation response message returned by the AEF, wherein the second revocation response message is configured to indicate that authorization information corresponding to the target resource has been deleted by the API invoker, and the third revocation response message is configured to indicate that the third revocation request message has been stored by the AEF; and
sending a first revocation response message to the UE, wherein the first revocation response message is configured to indicate that the revocation of the specified authorization has been completed.

According to a fifth aspect of embodiments of the present disclosure, there is provided an apparatus for authorization revocation, which is applied to a User Equipment (UE). The apparatus includes:
a first sending module, configured to send a first revocation request message to a Common API Framework (CAPIF) authentication/authorization function, wherein the first revocation request message is configured to request revocation of a specified authorization, and the specified authorization is an authorization corresponding to a target resource of the UE; and
a first receiving module, configured to receive a first revocation response message returned by the CAPIF authentication/authorization function, wherein the first revocation response message is configured to indicate that the revocation of the specified authorization has been completed.

According to a sixth aspect of embodiments of the present disclosure, there is provided an apparatus for authorization revocation, which is applied to an API invoker. The apparatus includes:
a second receiving module, configured to receive a second revocation request message sent by a Common API Framework (CAPIF) authentication/authorization function, wherein the second revocation request message is configured to request revocation of a specified authorization, and the specified authorization is an authorization corresponding to a target resource of a User Equipment (UE);
a deleting module, configured to delete, based on the second revocation request message, authorization information corresponding to the target resource; and
a second sending module, configured to, in a case where the authorization information is deleted, send a second revocation response message to the CAPIF authentication/authorization function, wherein the second revocation response message is configured to indicate that the authorization information has been deleted by the API invoker.

According to a seventh aspect of embodiments of the present disclosure, there is provided an apparatus for authorization revocation, which is applied to an API Exposing Function (AEF). The apparatus includes:
a third receiving module, configured to receive a third revocation request message sent by a Common API Framework (CAPIF) authentication/authorization function, wherein the third revocation request message is configured to request revocation of a specified authorization, and the specified authorization is an authorization corresponding to a target resource of a User Equipment (UE);
a storing module, configured to store the third revocation request message; and
a third sending module, configured to send a third revocation response message to the CAPIF authentication/authorization function, wherein the third revocation response message is configured to indicate that the first revocation request message has been stored by the AEF.

According to an eighth aspect of embodiments of the present disclosure, there is provided an apparatus for authorization revocation, which is applied to a Common API Framework (CAPIF) authentication/authorization function. The apparatus includes:
a fourth receiving module, configured to receive a first revocation request message sent by a User Equipment (UE), wherein the first revocation request message is configured to request revocation of a specified authorization, and the specified authorization is an authorization corresponding to a target resource of the UE;
a fourth sending module, configured to send a second revocation request message to an API invoker, and send a third revocation request message to an API Exposing Function (AEF);
a fifth receiving module, configured to receive a second revocation response message returned by the API invoker, and receive a third revocation response message returned by the AEF, wherein the second revocation response message is configured to indicate that authorization information corresponding to the target resource has been deleted by the API invoker, and the third revocation response message is configured to indicate that the third revocation request message has been stored by the AEF; and
a fifth sending module, configured to send a first revocation response message to the UE, wherein the first revocation response message is configured to indicate that the revocation of the specified authorization has been completed.

According to a ninth aspect of embodiments of the present disclosure, there is provided a communication system, including:
a User Equipment (UE), configured to perform any method for authorization revocation on the UE side as described above;
an API invoker, configured to perform any method for authorization revocation on the API invoker side as described above;
an API Exposing Function (AEF), configured to perform any method for authorization revocation on the AEF side as described above; and
a Common API Framework (CAPIF) authentication/authorization function, configured to perform any method for authorization revocation on the CAPIF authentication/authorization function side as described above.

According to a tenth aspect of embodiments of the present disclosure, there is provided an apparatus for authorization revocation, including:
a processor; and
a memory configured to store processor-executable instructions;
wherein the processor is configured to execute any method for authorization revocation on the UE side as described above.

According to an eleventh aspect of embodiments of the present disclosure, there is provided an apparatus for authorization revocation, including:
a processor; and
a memory configured to store processor-executable instructions;
wherein the processor is configured to execute any method for authorization revocation on the API invoker side as described above.

According to a twelfth aspect of embodiments of the present disclosure, there is provided an apparatus for authorization revocation, including:
a processor; and
a memory configured to store processor-executable instructions;
wherein the processor is configured to execute any method for authorization revocation on the AEF side as described above.

According to a thirteenth aspect of embodiments of the present disclosure, there is provided an apparatus for authorization revocation, including:
a processor; and
a memory configured to store processor-executable instructions;
wherein the processor is configured to execute any method for authorization revocation on the CAPIF authentication/authorization function side as described above.

The technical solutions provided by embodiments of the present disclosure may have the following beneficial effects:
in the present disclosure, the UE may initiate the revocation of the specified authorization, thereby achieving the purpose of enabling user authorization revocation during an API invocation procedure, with high availability.

It should be noted that the above general description and the following detailed description are merely illustrative and explanatory and should not be construed as limiting of the disclosure.

### BRIEF DESCRIPTION OF THE DRAWINGS

The accompanying drawings here, which are incorporated in and constitute a part of the description, illustrate embodiments consistent with the present disclosure and, together with the description, serve to explain principles of the present disclosure.
FIG. 1 is a schematic flowchart showing a method for authorization revocation according to an embodiment.
FIG. 2 is a schematic flowchart showing another method for authorization revocation according to an embodiment.
FIG. 3 is a schematic flowchart showing another method for authorization revocation according to an embodiment.
FIG. 4 is a schematic flowchart showing another method for authorization revocation according to an embodiment.
FIG. 5 is a schematic flowchart showing another method for authorization revocation according to an embodiment.
FIG. 6 is a block diagram showing an apparatus for authorization revocation according to an embodiment.
FIG. 7 is a block diagram showing another apparatus for authorization revocation according to an embodiment
FIG. 8 is a block diagram showing another apparatus for authorization revocation according to an embodiment
FIG. 9 is a block diagram showing another apparatus for authorization revocation according to an embodiment
FIG. 10 is a schematic structural diagram showing a communication system according to an embodiment of the present disclosure.
FIG. 11 is a schematic structural diagram showing an apparatus for authorization revocation according to an embodiment of the present disclosure.
FIG. 12 is a schematic structural diagram showing another apparatus for authorization revocation according to an embodiment of the present disclosure.
FIG. 13 is a schematic structural diagram showing another apparatus for authorization revocation according to an embodiment of the present disclosure.
FIG. 14 is a schematic structural diagram showing another apparatus for authorization revocation according to an embodiment of the present disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the present disclosure. Instead, they are merely examples of apparatuses and methods consistent with some aspects related to the present disclosure as recited in the appended claims.

The terms used in the present disclosure are merely for the purpose of describing particular embodiments and are not intended to limit the present disclosure. As used in the present disclosure and the appended claims, the singular forms "a", "the" and "said" are intended to include the plural forms as well, unless the context clearly indicates otherwise. It should also be understood that the term "and/or" as used herein refers to and includes any or all possible combinations of at least one associated listed items.

It should be understood that, although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the word "if" as used herein can be interpreted as "upon" or "when" or "in response to determination".

In the present disclosure, it can be assumed that a User Equipment (UE) is a target resource owner, and an API invoker is a UE or an Application Function (AF) in a SNA scenario. The API invoker obtains a target resource of the target resource owner based on user authorization, and the API invoker is a target resource owner.

A method for authorization revocation provided by the present disclosure is first introduced from a UE side.

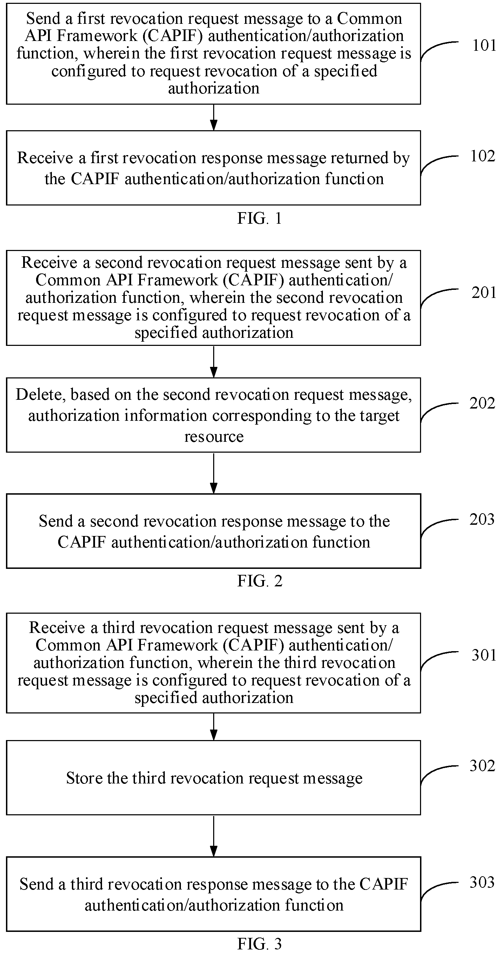

Embodiments of the present disclosure provide a method for authorization revocation, as shown in FIG. 1. FIG. 1 is a flowchart showing a method for authorization revocation according to an embodiment, which may be performed by a UE, where the UE is a target resource owner. The method may include steps 101 and 102.

In the step 101, a first revocation request message is sent to a Common API Framework (CAPIF) authentication/authorization function, and the first revocation request message is configured to request revocation of a specified authorization.

In embodiments of the present disclosure, the specified authorization is an authorization corresponding to a target resource of the UE.

The CAPIF authentication/authorization function may include but is not limited to a CAPIF core function (CCF), and an authorization function. Alternatively, the CAPIF authentication/authorization function may be implemented through a network function deployed by an operator, including but not limited to a Network Exposing Function (NEF).

In an example, the first revocation request message includes but is not limited to at least one of: a token type for which authorization revocation is requested; an identity of the CAPIF authentication/authorization function that issues a token; an API invoker identity (ID); an identity of a service API for which authorization revocation is requested; an identity of a service for which authorization revocation is requested; an identity of a service operation for which authorization revocation is requested; an identity of a target resource for which authorization revocation is requested; a target resource owner ID; a geographic area for which authorization revocation is requested; an AEF identifier; or a validity expiration time of authorization information.

The token type for which authorization revocation is requested includes but is not limited to a refresh token and an access token.

The identity of the CAPIF authentication/authorization function includes but is not limited to the following three categories.

The first category is domain name information, including but not limited to a Fully Qualified Domain Name (FQDN) of the CAPIF authentication/authorization function and an address of the CAPIF authentication/authorization function, including but not limited to an Internet Protocol (IP) address of the CAPIF authentication/authorization function.

The second category is a Network Function ID or a Network Function instance ID (or NF instance ID) of the CAPIF authentication/authorization function.

The third category is a Network Function Set ID of the CAPIF authentication/authorization function, etc.

The identity of the API invoker includes but is not limited to the following three categories.

The first category is a terminal identity of the API invoker, including but not limited to an IP Multimedia Private Identity (IMPI) of the API invoker, a Generic Public Subscription Identifier (GPSI) of the API invoker, an Application layer ID of the API invoker, an AKMA key identifier (A-KID) of the API invoker, a Bootstrapping Transaction Identifier (B-TID) of the API invoker, or a Subscription Concealed Identifier (SUCI) of the API invoker.

The second category is an Application Function ID or an Application ID.

The third category is an Application Function Group ID or an Application Group ID.

The identity of the service API for which the authorization revocation is requested may be the identity of the service API for which the target resource owner, that is, the UE, requests the authorization revocation.

The identity of the service for which the authorization revocation is requested may be the identity of the service for which the target resource owner, that is, the UE, requests the authorization revocation.

The identity of the service operation for which the authorization revocation is requested may be the identity of the service operation for which the target resource owner, that is, the UE, requests the authorization revocation.

The identity of the target resource for which the authorization revocation is requested may be location information, Quality of Service (QoS) information, etc., for which the target resource owner, that is, the UE, requests the authorization revocation.

The identity of the target resource owner may include but is not limited to an IMPI of the target resource owner, or a GPSI of the target resource owner, or an application layer ID of the target resource owner, or an A-KID of the target resource owner, or a B-TID of the target resource owner, or a SUCI of the target resource owner, where the target resource owner is the UE.

The geographic area for which the authorization revocation is requested may refer to an area corresponding to a geographic location for which the target resource owner requests the authorization revocation. That is, if the API invoker is within the geographic area for which the UE requests the authorization revocation, the API invoker cannot obtain the authorization by the UE.

The identity of the API Exposing Function (AEF) includes but is not limited to the following three categories.

The first category is domain name information of the AEF, including but not limited to a FQDN and an IP address of the AEF.

The second category is a Network Function instance ID (or a NF instance ID) or a Network Function ID of the AEF.

The third category is a Network Function Set ID.

The authorization information may be a token, and the validity expiration time of the authorization information may be a validity expiration time of the token.

In the step 102, a first revocation response message returned by the CAPIF authentication/authorization function is received.

In embodiments of the present disclosure, when receiving the first revocation request message sent by the UE, the CAPIF authentication/authorization function may send a second revocation request message to the API invoker, and send the first revocation request message to the AEF. Furthermore, the CAPIF authentication/authorization function sends the first revocation response message to the UE based on a second revocation response message returned by the API invoker and a third revocation response message returned by the AEF. The first revocation response message is configured to indicate that the revocation of the specified authorization has been completed. The authorization revocation processing procedure of the CAPIF authentication/authorization function will be introduced on the CAPIF authentication/authorization function side, which will not be introduced here.

In the above embodiments, the UE may initiate the revocation of the specified authorization, thereby achieving the purpose of enabling the user authorization revocation during the API invocation procedure, with high availability.

In some embodiments, the UE as the target resource owner may perform mutual authentication with the CAPIF authentication/authorization function in advance. The CAPIF authentication/authorization function may include but is not limited to the CAPIF core function and the authorization function. Alternatively, the CAPIF authentication/authorization function may be implemented through a network function deployed by an operator, including but not limited to a NEF.

In an implementation, the UE may perform the mutual authentication with the CAPIF authentication/authorization function based on a certificate.

In another implementation, the API invoker may perform the mutual authentication with the CAPIF authentication/authorization function based on a Generic Bootstrapping Architecture (GBA)-based authentication mechanism.

In another implementation, the UE may perform the mutual authentication with the CAPIF authentication/authorization function based on an Authentication and Key Management for Applications (AKMA)-based authentication mechanism.

In an example, the CAPIF authentication/authorization function is the CCF, the UE may authenticate the CCF based on the certificate, and the CCF may authenticate the UE based on the GBA-based authentication mechanism, the AKMA-based authentication mechanism or the certificate-based authentication mechanism.

The CCF may generate the certificate for the UE after the UE onboarding procedure, that is, the certificate of the UE is assigned to the UE by the CAPIF authentication/authorization function.

In another example, the CAPIF authentication/authorization function is the authorization function, the UE may authenticate the authorization function based on the certificate, and the authorization function may authenticate the UE based on the GBA-based authentication mechanism, the AKMA-based authentication mechanism or the certificate-based authentication mechanism.

The certificate may be assigned by the CCF.

In embodiments of the present disclosure, when the mutual authentication between the UE and the CAPIF authentication/authorization function is passed, the UE may establish a first secure connection with the CAPIF authentication/authorization function via a Transport Layer Security (TLS).

Further, the UE may send the first revocation request message to the CAPIF authentication/authorization function through the first secure connection.

The CAPIF core function may receive, through the first secure connection, the first revocation response message sent by the CAPIF authentication/authorization function.

In the above embodiments, the CAPIF core function can perform the mutual authentication with the CAPIF authentication/authorization function. When the authentication is passed, the first secure connection is established to ensure secure transfer of the first revocation request message and the first revocation response message, with high availability.

Next, the method for authorization revocation provided by the present disclosure is introduced from the API invoker side.

Embodiments of the present disclosure provide a method for authorization revocation, as shown in FIG. 2. FIG. 2 is a flowchart showing a method for authorization revocation according to an embodiment, which may be performed by an API invoker. The API invoker may be another UE or AF different from the target resource owner, which is not limited by the present disclosure. The method may include steps 201 to 203.

In the step 201, a second revocation request message sent by a Common API Framework (CAPIF) authentication/authorization function is received, and the second revocation request message is configured to request revocation of a specified authorization.

In embodiments of the present disclosure, the specified authorization is an authorization corresponding to a target resource of a User Equipment (UE).

The CAPIF authentication/authorization function may include but is not limited to a CCF and an authorization function. Alternatively, the CAPIF authentication/authorization function may be implemented through a network function deployed by an operator, including but not limited to a NEF.

In embodiments of the present disclosure, the UE as the target resource owner actively initiates the authorization revocation, and the UE sends the first revocation request message to the CAPIF authentication/authorization function. The CAPIF authentication/authorization function determines, based on the first revocation request message, the second revocation request message which needs to be sent to the API invoker.

In an example, the second revocation request message includes but is not limited to at least one of: a token type for which authorization revocation is requested; an identity of the CAPIF authentication/authorization function that issues a token; an API invoker ID; an identity of a service API for which authorization revocation is requested; an identity of a service for which authorization revocation is requested; an identity of a service operation for which authorization revocation is requested; an identity of a target resource for which authorization revocation is requested; a target resource owner ID; a geographic area for which authorization revocation is requested; an AEF identifier; or a validity expiration time of authorization information.

The token type for which authorization revocation is requested includes but is not limited to a refresh token and an access token.

The identity of the CAPIF authentication/authorization function includes but is not limited to the following three categories.

The first category is domain name information, including but not limited to a Fully Qualified Domain Name (FQDN) of the CAPIF authentication/authorization function and an address of the CAPIF authentication/authorization function, including but not limited to an Internet Protocol (IP) address of the CAPIF authentication/authorization function.

The second category is a Network Function ID or a Network Function instance ID (or NF instance ID) of the CAPIF authentication/authorization function.

The third category is a Network Function Set ID of the CAPIF authentication/authorization function, etc.

The identity of the API invoker includes but is not limited to the following three categories.

The first category is a terminal identity of the API invoker, including but not limited to an IP Multimedia Private Identity (IMPI) of the API invoker, a Generic Public Subscription Identifier (GPSI) of the API invoker, an Application layer ID of the API invoker, an AKMA key identifier (A-KID) of the API invoker, a Bootstrapping Transaction Identifier (B-TID) of the API invoker, or a Subscription Concealed Identifier (SUCI) of the API invoker.

The second category is an Application Function ID or an Application ID.

The third category is an Application Function Group ID or an Application Group ID.

The identity of the service API for which the authorization revocation is requested may be the identity of the service API for which the target resource owner, that is, the UE, requests the authorization revocation.

The identity of the service for which the authorization revocation is requested may be the identity of the service for which the target resource owner, that is, the UE, requests the authorization revocation.

The identity of the service operation for which the authorization revocation is requested may be the identity of the service operation for which the target resource owner, that is, the UE, requests the authorization revocation.

The identity of the target resource for which the authorization revocation is requested may be location information, Quality of Service (QoS) information, etc., for which the target resource owner, that is, the UE, requests the authorization revocation.

The identity of the target resource owner may include but is not limited to an IMPI of the target resource owner, or a GPSI of the target resource owner, or an application layer ID of the target resource owner, or an A-KID of the target resource owner, or a B-TID of the target resource owner, or a SUCI of the target resource owner, where the target resource owner is the UE.

The geographic area for which the authorization revocation is requested may refer to an area corresponding to a geographic location for which the target resource owner requests the authorization revocation. That is, if the API invoker is within the geographic area for which the UE requests the authorization revocation, the API invoker cannot obtain the authorization by the UE.

The identity of the API Exposing Function (AEF) includes but is not limited to the following three categories.

The first category is domain name information of the AEF, including but not limited to a FQDN and an IP address of the AEF.

The second category is a Network Function instance ID (or a NF instance ID) or a Network Function ID of the AEF.

The third category is a Network Function Set ID.

The authorization information may be a token, and the validity expiration time of the authorization information may be a validity expiration time of the token.

In an embodiment of the present disclosure, if the token type for which authorization revocation is requested in the first revocation request message is the refresh token, the token type for which the authorization revocation is requested included in the second revocation request message sent by the CAPIF authentication/authorization function to the API invoker is the refresh token and the access token.

Specifically, the token type for which the authorization revocation is requested in the second revocation request message is the refresh token and the access token, that is, the second revocation request message requests to revoke authorization for a first token and a second token. The first token is a token whose token type is the refresh token determined according to the first revocation request message, and the second token is associated with the first token and the token type of the second token is the access token. Other information content of the second revocation request message is the same as information content of the first revocation request message.

Specifically, if the token type for which the authorization revocation is requested in the first revocation request message is the access token, the token type for which the authorization revocation is requested included in the second revocation request message sent by the CAPIF authentication/authorization function to the API invoker is the access token.

In the step 202, authorization information corresponding to the target resource is deleted based on the second revocation request message.

In an embodiment of the present disclosure, the authorization information corresponding to the target resource in the second revocation request message includes a token configured to obtain, modify or set the target resource.

The API invoker may delete, based on the second revocation request message, the token corresponding to the target resource. Specifically, in response to the token type for which the authorization revocation is requested included in the second revocation request message being the refresh token and the access token, the API invoker deletes the first token and the second token, a token type of the first token is the refresh token, and the second token is associated with the first token and a token type of the second token is the access token. The first token and the second token are tokens that meet a requirement of the second revocation request message.

In response to the token type for which the authorization revocation is requested in the second revocation request message being the access token, the API invoker deletes the second token, which is a token that meets the requirement of the second revocation request message.

In the step 203, a second revocation response message is sent to the CAPIF authentication/authorization function.

In embodiments of the present disclosure, the second revocation response message is configured to indicate that the API invoker has deleted the authorization information.

When deleting the token corresponding to the target resource, the API invoker may send the second revocation response message to the CAPIF authentication/authorization function, so that the CAPIF authentication/authorization function determines that the API invoker has deleted the authorization information.

In the above embodiments, the API invoker can delete, based on the second revocation request message sent by the CAPIF function, the authorization information corresponding to the target resource, thereby achieving the purpose of enabling user authorization revocation during the API invocation procedure, with high availability.

In some embodiments, the API invoker may perform mutual authentication with the CAPIF authentication/authorization function in advance. The CAPIF authentication/authorization function may include but is not limited to the CAPIF core function and the authorization function. Alternatively, the CAPIF authentication/authorization function may be implemented through a network function deployed by an operator, including but not limited to a NEF.

In an implementation, the API invoker may perform the mutual authentication with the CAPIF authentication/authorization function based on a certificate.

In another implementation, the API invoker may perform the mutual authentication with the CAPIF authentication/authorization function based on a GBA-based authentication mechanism.

In another implementation, the API invoker may perform the mutual authentication with the CAPIF authentication/authorization function based on an AKMA-based authentication mechanism.

In an example, the CAPIF authentication/authorization function is the CAPIF core function, the API invoker may authenticate the CAPIF core function based on the certificate, and the CAPIF core function may authenticate the API invoker based on the GBA-based authentication mechanism, the AKMA-based authentication mechanism or the certificate-based authentication mechanism.

The CAPIF core function may generate the certificate for the API invoker after the API invoker onboarding procedure.

In another example, the CAPIF authentication/authorization function is the authorization function, the API invoker may authenticate the authorization function based on the certificate, and the authorization function may authenticate the API invoker based on the GBA-based authentication mechanism, the AKMA-based authentication mechanism or the certificate-based authentication mechanism.

The certificate may be assigned by the CAPIF core function.

In embodiments of the present disclosure, when the mutual authentication between the API invoker and the CAPIF authentication/authorization function is passed, the API invoker may establish a second secure connection with the CAPIF authentication/authorization function via a TLS.

Further, the API invoker may receive, through the second secure connection, the second revocation request message sent by the CAPIF authentication/authorization function.

The API invoker may send, through the second secure connection, the second revocation response message to the CAPIF authentication/authorization function.

In the above embodiments, the API invoker can perform the mutual authentication with the CAPIF authentication/authorization function. When the authentication is passed, the second secure connection is established to ensure secure transfer of the second revocation request message and the second revocation response message, with high availability.

Next, the method for authorization revocation provided by the present disclosure is introduced from the AEF side.

Embodiments of the present disclosure provide a method for authorization revocation, as shown in FIG. 3. FIG. 3 is a flowchart showing a method for authorization revocation according to an embodiment, which may be performed by an AEF. The method may include steps 301 to 303.

In the step 301, a third revocation request message sent by a Common API Framework (CAPIF) authentication/authorization function is received, and the third revocation request message requests revocation of a specified authorization.

The specified authorization is an authorization corresponding to a target resource of a User Equipment (UE).

The CAPIF authentication/authorization function may include but is not limited to a CCF and an authorization function. Alternatively, the CAPIF authentication/authorization function may be implemented through a network function deployed by an operator, including but not limited to a NEF.

In an example, the third revocation request message includes but is not limited to at least one of: a token type for which authorization revocation is requested; an identity of the CAPIF authentication/authorization function that issues a token; an API invoker identity (ID); an identity of a service API for which authorization revocation is requested; an identity of a service for which authorization revocation is requested; an identity of a service operation for which authorization revocation is requested; an identity of a target resource for which authorization revocation is requested; a target resource owner ID; a geographic area for which authorization revocation is requested; an AEF identifier; or a validity expiration time of authorization information.

The token type for which authorization revocation is requested includes but is not limited to a refresh token and an access token.

The identity of the CAPIF authentication/authorization function includes but is not limited to the following three categories.

The first category is domain name information, including but not limited to a Fully Qualified Domain Name (FQDN) of the CAPIF authentication/authorization function and an address of the CAPIF authentication/authorization function, including but not limited to an Internet Protocol (IP) address of the CAPIF authentication/authorization function.

The second category is a Network Function ID or a Network Function instance ID (or NF instance ID) of the CAPIF authentication/authorization function.

The third category is a Network Function Set ID of the CAPIF authentication/authorization function, etc.

The identity of the API invoker includes but is not limited to the following three categories.

The first category is a terminal identity of the API invoker, including but not limited to an IP Multimedia Private Identity (IMPI) of the API invoker, a Generic Public Subscription Identifier (GPSI) of the API invoker, an Application layer ID of the API invoker, an AKMA key identifier (A-KID) of the API invoker, a Bootstrapping Transaction Identifier (B-TID) of the API invoker, or a Subscription Concealed Identifier (SUCI) of the API invoker.

The second category is an Application Function ID or an Application ID.

The third category is an Application Function Group ID or an Application Group ID.

The identity of the service API for which the authorization revocation is requested may be the identity of the service API for which the target resource owner, that is, the UE, requests the authorization revocation.

The identity of the service for which the authorization revocation is requested may be the identity of the service for which the target resource owner, that is, the UE, requests the authorization revocation.

The identity of the service operation for which the authorization revocation is requested may be the identity of the service operation for which the target resource owner, that is, the UE, requests the authorization revocation.

The identity of the target resource for which the authorization revocation is requested may be location information, Quality of Service (QoS) information, etc., for which the target resource owner, that is, the UE, requests the authorization revocation.

The identity of the target resource owner may include but is not limited to an IMPI of the target resource owner, or a GPSI of the target resource owner, or an application layer ID of the target resource owner, or an A-KID of the target resource owner, or a B-TID of the target resource owner, or a SUCI of the target resource owner, where the target resource owner is the UE.

The geographic area for which the authorization revocation is requested may refer to an area corresponding to a geographic location for which the target resource owner requests the authorization revocation. That is, if the API invoker is within the geographic area for which the UE requests the authorization revocation, the API invoker cannot obtain the authorization by the UE.

The identity of the API Exposing Function (AEF) includes but is not limited to the following three categories.

The first category is domain name information of the AEF, including but not limited to a FQDN and an IP address of the AEF.

The second category is a Network Function instance ID (or a NF instance ID) or a Network Function ID of the AEF.

The third category is a Network Function Set ID.

The authorization information may be a token, and the validity expiration time of the authorization information may be a validity expiration time of the token.

In an embodiment of the present disclosure, if the token type for which the authorization revocation is requested included in the first revocation request message sent by the UE to the CAPIF authentication/authorization function is the refresh token, then what the UE sends to the AEF is a revocation request for an access token generated based on the refresh token, that is, the token type for which authorization revocation is requested in the third revocation request message can only be the access token.

In an embodiment of the present disclosure, if the token type for which the authorization revocation is requested included in the first revocation request message sent by the UE to the CAPIF authentication/authorization function is the access token, then the token type for which the authorization revocation is requested in the third revocation request message is the access token.

In the step 302, the third revocation request message is stored.

In the step 303, a third revocation response message is sent to the CAPIF authentication/authorization function.

The third revocation response message is configured to indicate that the AEF has stored the third revocation request message.

In the above embodiments, the AEF can store the third revocation request message in time, and inform the CAPIF authentication/authorization function through the third revocation response message, thereby achieving the purpose of enabling user authorization revocation during the API invocation procedure, with high availability.

In some embodiments, if the AEF receives a service API invocation request message sent by the API invoker, the AEF determines, according to the stored third revocation request message, whether a token carried in the service API invocation request message is valid, and the service API invocation request message requests to obtain the target resource, and the token is configured to obtain, modify or set the target resource.

It should also be noted that the only when the service API invocation request message carries a second token whose token type is the access token, the AEF will determine, according to the stored third revocation request message, whether the token carried in the service API invocation request message is valid.

If the service API invocation request message received by the AEF carries a first token whose token type is the refresh token, the AEF may directly send a service API invocation rejection message to the API invoker.

In an embodiment of the present disclosure, the AEF determines whether information of the token in the service API invocation request message is contained in information of the stored third revocation request message. If the information of the token in the service API invocation request message is contained in the information of the stored third revocation request message, the AEF determines that the token carried in the service API invocation request message is invalid.

In this case, the AEF may send a service API invocation rejection message to the API invoker.

In the above embodiments, the purpose of enabling user authorization revocation during the API invocation procedure is achieved, with high availability.

In some embodiments, the AEF may perform mutual authentication with the API invoker in advance.

In an implementation, the AEF may perform the mutual authentication with the API invoker based on a certificate.

In another implementation, the AEF may perform the mutual authentication with the API invoker based on a GBA-based authorization mechanism.

In another implementation, the AEF may perform the mutual authentication with the API invoker based on an AKMA-based authorization mechanism.

In an example, the API invoker may authenticate the AEF based on the certificate, and the AEF may authenticate the API invoker based on the GBA-based authorization mechanism, the AKMA-based authorization mechanism or the certificate-based authorization mechanism.

The certificate may be assigned by the CAPIF core function.

In embodiments of the present disclosure, when the mutual authentication between the AEF and the API invoker is passed, the AEF may establish a third secure connection with the API invoker via a TLS.

Further, the AEF receives the service API invocation request message sent, through the third secure connection, by the API invoker.

The AEF may send the service API invocation rejection message to the API invoker through the third secure connection.

In the above embodiments, the AEF can perform the mutual authentication with the API invoker, and when the authentication is passed, the third secure connection is established, thereby ensuring the secure transfer of the token, with high availability.

Next, the method for authorization revocation provided by the present disclosure is introduced from the CAPIF function side.

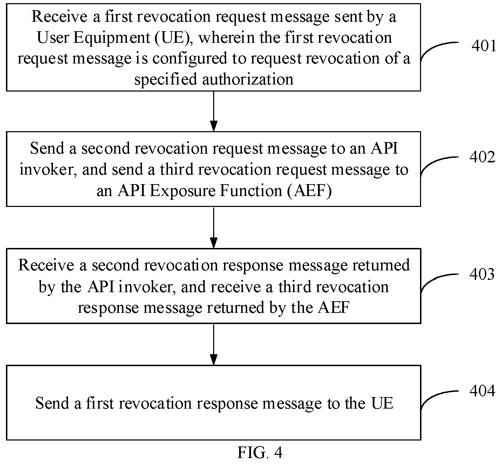

Embodiments of the present disclosure provide a method for authorization revocation, as shown in FIG. 4. FIG. 4 is a flowchart showing a method for authorization revocation according to an embodiment, which may be performed by a CAPIF function. The CAPIF function may include but is not limited to a CAPIF core function and an authorization function, or the CAPIF authentication/authorization function may be implemented by a network function deployed by an operator, which is not limited in the present disclosure. The method may include steps 401 to 404.

In the step 401, a first revocation request message sent by a User Equipment (UE) is received, and the first revocation request message requests revocation of a specified authorization.

In embodiments of the present disclosure, the specified authorization is an authorization corresponding to a target resource of the UE.

In an example, the first revocation request message includes but is not limited to at least one of: a token type for which authorization revocation is requested; an identity of the CAPIF authentication/authorization function that issues a token; an API invoker identity (ID); an identity of a service API for which authorization revocation is requested; an identity of a service for which authorization revocation is requested; an identity of a service operation for which authorization revocation is requested; an identity of a target resource for which authorization revocation is requested; a target resource owner ID; a geographic area for which authorization revocation is requested; an AEF identifier; or a validity expiration time of authorization information.

The token type for which authorization revocation is requested includes but is not limited to a refresh token and an access token.

The identity of the CAPIF authentication/authorization function includes but is not limited to the following three categories.

The first category is domain name information, including but not limited to a Fully Qualified Domain Name (FQDN) of the CAPIF authentication/authorization function and an address of the CAPIF authentication/authorization function, including but not limited to an Internet Protocol (IP) address of the CAPIF authentication/authorization function.

The second category is a Network Function ID or a Network Function instance ID (or NF instance ID) of the CAPIF authentication/authorization function.

The third category is a Network Function Set ID of the CAPIF authentication/authorization function, etc.

The identity of the API invoker includes but is not limited to the following three categories.

The first category is a terminal identity of the API invoker, including but not limited to an IP Multimedia Private Identity (IMPI) of the API invoker, a Generic Public Subscription Identifier (GPSI) of the API invoker, an Application layer ID of the API invoker, an AKMA key identifier (A-KID) of the API invoker, a Bootstrapping Transaction Identifier (B-TID) of the API invoker, or a Subscription Concealed Identifier (SUCI) of the API invoker.

The second category is an Application Function ID or an Application ID.

The third category is an Application Function Group ID or an Application Group ID.

The identity of the service API for which the authorization revocation is requested may be the identity of the service API for which the target resource owner, that is, the UE, requests the authorization revocation.

The identity of the service for which the authorization revocation is requested may be the identity of the service for which the target resource owner, that is, the UE, requests the authorization revocation.

The identity of the service operation for which the authorization revocation is requested may be the identity of the service operation for which the target resource owner, that is, the UE, requests the authorization revocation.

The identity of the target resource for which the authorization revocation is requested may be location information, Quality of Service (QoS) information, etc., for which the target resource owner, that is, the UE, requests the authorization revocation.

The identity of the target resource owner may include but is not limited to an IMPI of the target resource owner, or a GPSI of the target resource owner, or an application layer ID of the target resource owner, or an A-KID of the target resource owner, or a B-TID of the target resource owner, or a SUCI of the target resource owner, where the target resource owner is the UE.

The geographic area for which the authorization revocation is requested may refer to an area corresponding to a geographic location for which the target resource owner requests the authorization revocation. That is, if the API invoker is within the geographic area for which the UE requests the authorization revocation, the API invoker cannot obtain the authorization by the UE.

The identity of the API Exposing Function (AEF) includes but is not limited to the following three categories.

The first category is domain name information of the AEF, including but not limited to a FQDN and an IP address of the AEF.

The second category is a Network Function instance ID (or a NF instance ID) or a Network Function ID of the AEF.

The third category is a Network Function Set ID.

The authorization information may be a token, and the validity expiration time of the authorization information may be a validity expiration time of the token.

In the step 402, a second revocation request message is sent to the API invoker, and a third revocation request message is sent to an API Exposing Function (AEF).

In an embodiment of the present disclosure, the CAPIF authentication/authorization function can determine, based on the identity of the API invoker included in the first revocation request message, the API invoker that receives the first revocation request message, to subsequently send the second revocation request message to the API invoker.

The CAPIF authentication/authorization function may determine, based on the identity of the AEF included in the first revocation request message, the AEF that receives the first revocation request message, to subsequently send the third revocation request message to the API invoker.

If the token type for which the authorization revocation is requested included in the first revocation request message is the refresh token, the revoked token type included in the second revocation request message is the refresh token and the access token, and the revoked token type included in the third revocation request message is the access token.

It should be noted that the CAPIF authentication/authorization function receives the first revocation request message, and the token type for which the authorization revocation is requested included in the first revocation request message is the refresh token. The CAPIF authentication/authorization function changes the token type included therein to the refresh token and the access token, and other information remains unchanged, thereby obtaining the second revocation request message.

Similarly, the CAPIF authentication/authorization function receives the first revocation request message, and the token type for which the authorization revocation is requested included in the first revocation request message is the refresh token. The CAPIF authentication/authorization function changes the token type included therein to the access token, and other information remains unchanged, thereby obtaining the third revocation request message.

If the token type for which authorization revocation is requested included in the first revocation request message is the access token, the revoked token type included in the second revocation request message is the access token, and the revoked token type included in the third revocation request message is the access token.

It should be noted that the CAPIF authentication/authorization function receives the first revocation request message, and the token type for which the authorization revocation is requested included in the first revocation request message is the access token. The CAPIF authentication/authorization function determines that information in the second revocation request message is the same as information in the first revocation request message, and information in the third revocation request message is also the same as the information in the first revocation request message.

In the step 403, a second revocation response message returned by the API invoker is received, and a third revocation response message returned by the AEF is received.

In embodiments of the present disclosure, the second revocation response message is configured to indicate that the API invoker has deleted the authorization information corresponding to the target resource, and the third revocation response message is configured to indicate that the AEF has stored the third revocation request message.

In the step 404, a first revocation response message is sent to the UE.

In an embodiment of the present disclosure, when receiving the second revocation response message and the third revocation response message, the CAPIF authentication/authorization function determines that both the API invoker and the AEF have completed the authorization revocation. In this case, the CAPIF authentication/authorization function can send the first revocation response message to the UE, and the first revocation response message is configured to indicate that the revocation of the specified authorization has been completed.

In the above embodiments, the UE may initiate the revocation of the specified authorization, thereby achieving the purpose of enabling user authorization revocation during the API invocation procedure, with high availability.

In some embodiments, the CAPIF authentication/authorization function may perform mutual authentication with the UE as the target resource owner in advance. The CAPIF authentication/authorization function may include but is not limited to the CAPIF core function and the authorization function. Alternatively, the CAPIF authentication/authorization function may be implemented through a network function deployed by an operator, including but not limited to a NEF.

In an implementation, the CAPIF authentication/authorization function may perform the mutual authentication with the UE based on a certificate.

In another implementation, the CAPIF authentication/authorization function may perform the mutual authentication with the UE based on a GBA-based authentication mechanism.

In another implementation, the CAPIF authentication/authorization function may perform the mutual authentication with the UE based on an AKMA-based authentication mechanism.

In an example, the CAPIF authentication/authorization function is a CAPIF core function, and the UE may authenticate the CAPIF core function based on the certificate, the CAPIF core function may authenticate the UE based on the GBA-based authentication mechanism, the AKMA-based authentication mechanism or the certificate-based authentication mechanism.

The CAPIF core function may generate the certificate for the UE after the UE's API invocation program onboarding. That is, the certificate of the UE is assigned to the UE by the CAPIF authentication/authorization function.

In another example, the CAPIF authentication/authorization function is the authorization function, the UE may authenticate the authorization function based on the certificate, and the authorization function may authenticate the UE based on the GBA-based authentication mechanism, the AKMA-based authentication mechanism or the certificate-based authentication mechanism.

The certificate may be assigned by the CAPIF core function.

In embodiments of the present disclosure, when the mutual authentication between the CAPIF authentication/authorization function and the UE is passed, the CAPIF authentication/authorization function may establish a first secure connection with the UE via a TLS.

Further, the CAPIF authentication/authorization function may receive, through the first secure connection, the first revocation request message sent by the UE.

The CAPIF authentication/authorization function may send, through the first secure connection, the first revocation response message to the UE.

In the above embodiments, the CAPIF authentication/authorization function can perform the mutual authentication with the UE, and when the authentication is passed, the first secure connection is established, thereby ensuring the secure transfer of the first revocation request message and the first revocation response message, with high availability.

In some embodiments, the CAPIF authentication/authorization function may perform the mutual authentication with the API invoker in advance. The CAPIF authentication/authorization function may include but is not limited to the CAPIF core function and the authorization function. Alternatively, the CAPIF authentication/authorization function may be implemented through a network function deployed by an operator, including but not limited to a NEF. The API invoker may be a UE or an AF, where the UE is a UE different from the target resource owner.

In an implementation, the CAPIF authentication/authorization function may perform the mutual authentication with the API invoker based on a certificate.

In another implementation, the CAPIF authentication/authorization function may perform the mutual authentication with the API invoker based on a GBA-based authentication mechanism.

In another implementation, the CAPIF authentication/authorization function may perform the mutual authentication with the API invoker based on an AKMA-based authentication mechanism.

In an example, the CAPIF authentication/authorization function is the CAPIF core function, and the API invoker can authenticate the CAPIF core function based on the certificate. The CAPIF core function can authenticate the API invoker based on the GBA-based authentication mechanism, the AKMA-based authentication mechanism or the certificate-based authentication mechanism.

The CAPIF core function can generate the certificate for the API invoker after the API invoker onboarding. That is, the certificate of the UE is assigned to the UE by the CAPIF authentication/authorization function.

In another example, the CAPIF authentication/authorization function is the authorization function, the API invoker may authenticate the authorization function based on the certificate, and the authorization function may authenticate the API invoker based on the GBA-based authentication mechanism, the AKMA-based authentication mechanism or the certificate-based authentication mechanism.

The certificate may be assigned by the CAPIF core function.

In embodiments of the present disclosure, when the mutual authentication between the CAPIF authentication/authorization function and the API invoker is passed, the API invoker may establish a second secure connection with the CAPIF authentication/authorization function via a TLS.

Furthermore, the CAPIF authentication/authorization function may send the second revocation request message to the API invoker through the second secure connection.

The CAPIF authentication/authorization function may receive, through the second secure connection, the second revocation response message sent by the API invoker.

In the above embodiments, the CAPIF authentication/authorization function can perform the mutual authentication with the API invoker, and when the authentication is passed, the second secure connection is established, thereby ensuring the secure transfer of the second revocation request message and the second revocation response message, with high availability.

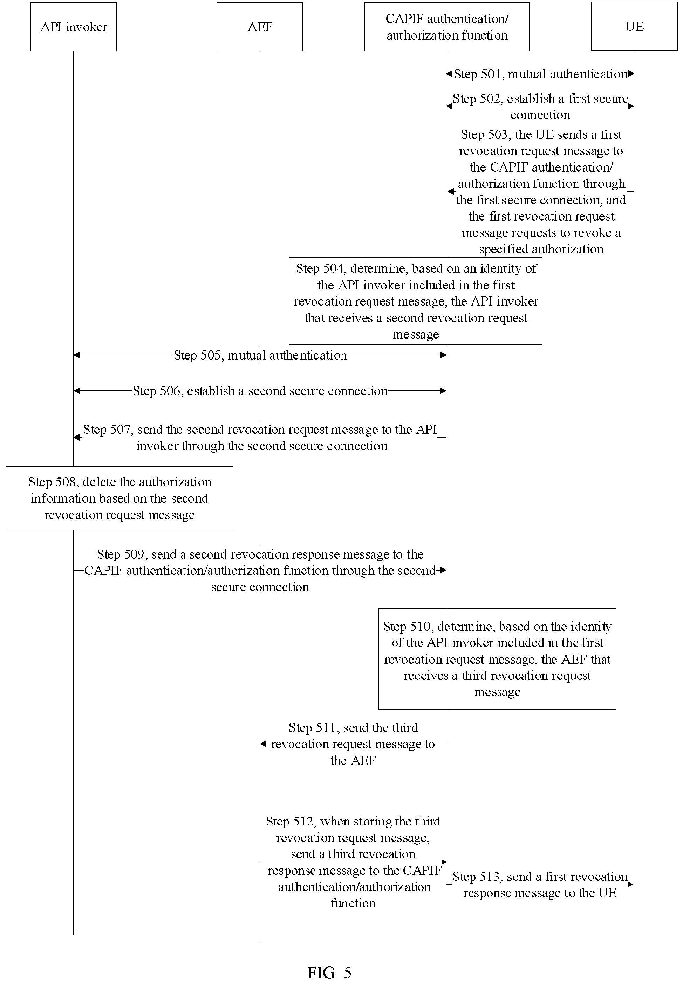

In some embodiments, reference is made to FIG. 5. FIG. 5 is a flowchart showing a method for authorization revocation according to an embodiment, and the method may include steps 500 to 513.

In the step 500, the API invoker obtains a specified authorization from the UE in advance.

The specified authorization is an authorization corresponding to a target resource of the UE.

In embodiments of the present disclosure, the UE is the target resource owner, and the API invoker is another UE or AF, which is not limited in the present disclosure.

In the step 501, the UE performs mutual authentication with the CAPIF authentication/authorization function.

In embodiments of the present disclosure, the CAPIF authentication/authorization function may include but is not limited to the CAPIF core function and the authorization function. Alternatively, the CAPIF authentication/authorization function may be implemented through a network function deployed by an operator, including but not limited to a NEF.

In an implementation, the UE may perform the mutual authentication with the CAPIF authentication/authorization function based on a certificate.

In another implementation, the UE may perform the mutual authentication with the CAPIF authentication/authorization function based on a GBA-based authentication mechanism.

In another implementation, the UE may perform the mutual authentication with the CAPIF authentication/authorization function based on an AKMA-based authentication mechanism.

In an example, the CAPIF authentication/authorization function is a CAPIF core function, and the UE may authenticate the CAPIF core function based on the certificate, the CAPIF core function may authenticate the UE based on the GBA-based authentication mechanism, the AKMA-based authentication mechanism or the certificate-based authentication mechanism.

The CAPIF core function can generate the certificate for the API invoker after the UE onboarding.

In another example, the CAPIF authentication/authorization function is the authorization function, the UE may authenticate the authorization function based on the certificate, and the authorization function may authenticate the UE based on the GBA-based authentication mechanism, the AKMA-based authentication mechanism or the certificate-based authentication mechanism.

The certificate may be assigned by the CAPIF core function.

In the step 502, the UE establishes a first secure connection with the CAPIF authentication/authorization function.

In embodiments of the present disclosure, when the mutual authentication between the UE and the CAPIF authentication/authorization function is passed, the UE may establish the first secure connection with the CAPIF authentication/authorization function via a TLS.

In the step 503, the UE sends a first revocation request message to the CAPIF authentication/authorization function through the first secure connection, and the first revocation request message requests to revoke the specified authorization.

In an example, the first revocation request message includes but is not limited to at least one of: a token type for which authorization revocation is requested; an identity of the CAPIF authentication/authorization function that issues a token; an API invoker identity (ID); an identity of a service API for which authorization revocation is requested; an identity of a service for which authorization revocation is requested; an identity of a service operation for which authorization revocation is requested; an identity of a target resource for which authorization revocation is requested; a target resource owner ID; a geographic area for which authorization revocation is requested; an AEF identifier; or a validity expiration time of authorization information.

The token type for which authorization revocation is requested includes but is not limited to a refresh token and an access token.

The identity of the CAPIF authentication/authorization function includes but is not limited to the following three categories.

The first category is domain name information, including but not limited to a Fully Qualified Domain Name (FQDN) of the CAPIF authentication/authorization function and an address of the CAPIF authentication/authorization function, including but not limited to an Internet Protocol (IP) address of the CAPIF authentication/authorization function.

The second category is a Network Function ID or a Network Function instance ID (or NF instance ID) of the CAPIF authentication/authorization function.

The third category is a Network Function Set ID of the CAPIF authentication/authorization function, etc.

The identity of the API invoker includes but is not limited to the following three categories.

The first category is a terminal identity of the API invoker, including but not limited to an IP Multimedia Private Identity (IMPI) of the API invoker, a Generic Public Subscription Identifier (GPSI) of the API invoker, an Application layer ID of the API invoker, an AKMA key identifier (A-KID) of the API invoker, a Bootstrapping Transaction Identifier (B-TID) of the API invoker, or a Subscription Concealed Identifier (SUCI) of the API invoker.

The second category is an Application Function ID or an Application ID.

The third category is an Application Function Group ID or an Application Group ID.

The identity of the service API for which the authorization revocation is requested may be the identity of the service API for which the target resource owner, that is, the UE, requests the authorization revocation.

The identity of the service for which the authorization revocation is requested may be the identity of the service for which the target resource owner, that is, the UE, requests the authorization revocation.

The identity of the service operation for which the authorization revocation is requested may be the identity of the service operation for which the target resource owner, that is, the UE, requests the authorization revocation.

The identity of the target resource for which the authorization revocation is requested may be location information, Quality of Service (QoS) information, etc., for which the target resource owner, that is, the UE, requests the authorization revocation.

The identity of the target resource owner may include but is not limited to an IMPI of the target resource owner, or a GPSI of the target resource owner, or an application layer ID of the target resource owner, or an A-KID of the target resource owner, or a B-TID of the target resource owner, or a SUCI of the target resource owner, where the target resource owner is the UE.

The geographic area for which the authorization revocation is requested may refer to an area corresponding to a geographic location for which the target resource owner requests the authorization revocation. That is, if the API invoker is within the geographic area for which the UE requests the authorization revocation, the API invoker cannot obtain the authorization by the UE.

The identity of the API Exposing Function (AEF) includes but is not limited to the following three categories.

The first category is domain name information of the AEF, including but not limited to a FQDN and an IP address of the AEF.

The second category is a Network Function instance ID (or a NF instance ID) or a Network Function ID of the AEF.

The third category is a Network Function Set ID.

The authorization information may be a token, and the validity expiration time of the authorization information may be a validity expiration time of the token.

In the step 504, the CAPIF authentication/authorization function determines, based on an API invoker ID included in the first revocation request message, the API invoker that receives the second revocation request message.

In the step 505, the CAPIF authentication/authorization function performs mutual authentication with the API invoker.

The specific authentication manner is similar to the authentication manner in the above embodiments, which will not be repeated here.

In the step 506, the CAPIF authentication/authorization function establishes a second secure connection with the API invoker.

In the step 507, the CAPIF authentication/authorization function sends a second revocation request message to the API invoker through the second secure connection.

If the token type for which the authorization revocation is requested included in the first revocation request message is the refresh token, then the revoked token type included in the second revocation request message is the refresh token and the access token, and other information content included in the second revocation request message is the same as information content in the first revocation request message.

If the token type for which the authorization revocation is requested included in the first revocation request message is the access token, then the revoked token type included in the second revocation request message is the access token, that is, the information content included in the second revocation request message is the same as the information content of the first revocation request message.

In the step 508, the API invoker deletes the authorization information based on the second revocation request message.

In an embodiment of the present disclosure, if the revoked token type included in the second revocation request message is the refresh token and the access token, the API invoker may delete a first token and a second token. The first token is a token whose token type is the refresh token determined according to the first revocation request message, and the second token is associated with the first token and the token type of the second token is the access token.

If the revoked token type included in the second revocation request message is the access token, the API invoker may delete the second token.

In the step 509, the API invoker sends a second revocation response message to the CAPIF authentication/authorization function through the second secure connection.

The second revocation response message is configured to indicate that the API invoker has deleted the authorization information.

In the step 510, the CAPIF authentication/authorization function determines, based on the identity of the API invoker included in the first revocation request message, the AEF that receives the third revocation request message.

In the step 511, the CAPIF authentication/authorization function sends the third revocation request message to the AEF.

If the token type for which the authorization revocation is requested included in the first revocation request message is the refresh token, or the token type for which the authorization revocation is requested included in the first revocation request message is the access token, the revoked token type included in the third revocation request message is the access token.

In the step 512, when storing the third revocation request message, the AEF sends the third revocation response message to the CAPIF authentication/authorization function.

The third revocation response message is configured to indicate that the AEF has stored the third revocation request message.

It should also be noted that the API invoker can perform mutual authentication with the AEF and establish a third secure connection (not shown in FIG. 5). Further, the API invoker can send a service API invocation request message to the AEF through the third secure connection. If the AEF receives the service API invocation request message sent by the API invoker, it determines, according to the stored third revocation request message, whether the token carried in the service API invocation request message is valid, and the service API invocation request message requests to obtain the target resource. If the AEF determines that the token is invalid, the AEF sends a service API invocation rejection message to the API invoker.

In the step 513, the CAPIF authentication/authorization function sends the first revocation response message to the UE.

The first revocation response message is configured to indicate that the revocation of the specified authorization has been completed.

In the above embodiments, the UE may initiate the revocation of the specified authorization, thereby achieving the purpose of enabling the user authorization revocation during the API invocation procedure, with high availability.

It should also be noted that the above-mentioned AEF and CAPIF authentication/authorization function can be deployed in the form of network function of the core network. For example, the AEF and the CAPIF authentication/authorization function are respectively deployed as different functional modules on the same or different core network devices. Alternatively, the AEF and the CAPIF authentication/authorization function may be deployed in the form of application servers, for example, respectively deployed as application servers with corresponding functions. The present disclosure does not limit the specific deployment form.

Corresponding to embodiments of the aforementioned application function implementation method, the present disclosure further provides embodiments of an application function implementation apparatus.

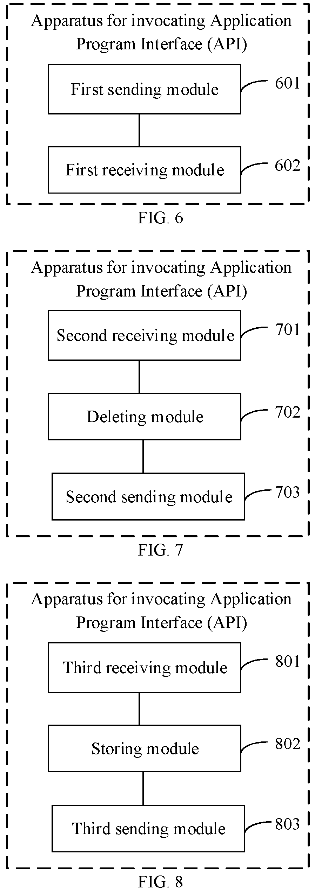

Reference is made to FIG. 6. FIG. 6 is a block diagram showing an apparatus for authorization revocation according to an embodiment, which is applied to a User Equipment (UE) and includes:
a first sending module 601, configured to send a first revocation request message to a Common API Framework (CAPIF) authentication/authorization function, the first revocation request message is configured to request revocation of a specified authorization, and the specified authorization is an authorization corresponding to a target resource of the UE; and
a first receiving module 602, configured to receive a first revocation response message returned by the CAPIF authentication/authorization function, and the first revocation response message is configured to indicate that the revocation of the specified authorization has been completed.

Reference is made to FIG. 7. FIG. 7 is a block diagram showing an apparatus for authorization revocation according to an embodiment, which is applied to an API invoker and includes:
a second receiving module 701, configured to receive a second revocation request message sent by a Common API Framework (CAPIF) authentication/authorization function, the second revocation request message is configured to request revocation of a specified authorization, and the specified authorization is an authorization corresponding to a target resource of a User Equipment (UE);
a deleting module 702, configured to delete, based on the second revocation request message, authorization information corresponding to the target resource; and
a second sending module 703, configured to send a second revocation response message to the CAPIF authentication/authorization function, and the second revocation response message is configured to indicate that the authorization information has been deleted by the API invoker.

Reference is made to FIG. 8. FIG. 8 is a block diagram showing an apparatus for authorization revocation according to an embodiment, which is applied to an API Exposing Function (AEF) and includes:
a third receiving module 801, configured to receive a third revocation request message sent by a Common API Framework (CAPIF) authentication/authorization function, the third revocation request message is configured to request revocation of a specified authorization, and the specified authorization is an authorization corresponding to a target resource of a User Equipment (UE);
a storing module 802, configured to store the third revocation request message; and
a third sending module 803, configured to send a third revocation response message to the CAPIF authentication/authorization function, and the third revocation response message is configured to indicate that the first revocation request message has been stored by the AEF.

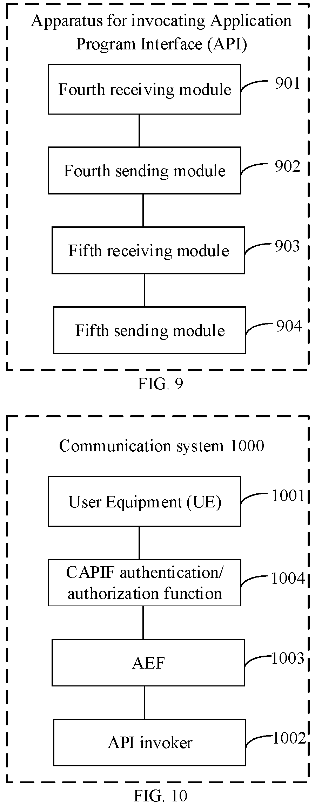

Reference is made to FIG. 9. FIG. 9 is a block diagram showing an apparatus for authorization revocation according to an embodiment, which is applied to a Common API Framework (CAPIF) authentication/authorization function, and includes:
a fourth receiving module 901, configured to receive a first revocation request message sent by a User Equipment (UE), the first revocation request message is configured to request revocation of a specified authorization, and the specified authorization is an authorization corresponding to a target resource of the UE;
a fourth sending module 902, configured to send a second revocation request message to an API invoker, and send a third revocation request message to an API Exposing Function (AEF);
a fifth receiving module 903, configured to receive a second revocation response message returned by the API invoker, and receive a third revocation response message returned by the AEF, the second revocation response message is configured to indicate that authorization information corresponding to the target resource has been deleted by the API invoker, and the third revocation response message is configured to indicate that the third revocation request message has been stored by the AEF; and
a fifth sending module 904, configured to send a first revocation response message to the UE, and the first revocation response message is configured to indicate that the revocation of the specified authorization has been completed.

For the apparatus embodiments, since they basically correspond to the method embodiments, the relevant parts can be referred to the description of the method embodiments. The apparatus embodiments described above are only illustrative. The units described as separated parts may or may not be physically separated, and the parts shown as units may or may not be physical units, that is, the units may be located in one place, or may be distributed over a plurality of network units. Some or all of the modules may be selected according to actual needs to achieve the objectives of the solutions of the present disclosure. Those of ordinary skill in the art can understand and implement the present disclosure without paying creative labor.

Correspondingly, the present disclosure further provides a computer-readable storage medium having a computer program stored thereon, and the computer program is configured to execute any method for authorization revocation on the UE side as described above.

Correspondingly, the present disclosure further provides a computer-readable storage medium having a computer program stored thereon, and the computer program is configured to execute any method for authorization revocation on the API invoker side as described above.

Correspondingly, the present disclosure further provides a computer-readable storage medium having a computer program stored thereon, and the computer program is configured to execute any method for authorization revocation on the AEF side as described above.

Correspondingly, the present disclosure further provides a computer-readable storage medium having a computer program stored thereon, and the computer program is configured to execute any method for authorization revocation on the CAPIF function side as described above.

Correspondingly, the present disclosure further provides a communication system, including:
a User Equipment (UE), configured to perform any method for authorization revocation on the UE side as described above;
an API invoker, configured to perform any method for authorization revocation on the API invoker side as described above;
an API Exposing Function (AEF), configured to perform any method for authorization revocation on the AEF side as described above; and
a Common API Framework (CAPIF) authentication/authorization function, configured to perform any method for authorization revocation on the CAPIF authentication/authorization function side as described above.

As shown in FIG. 10, FIG. 10 is a schematic structural diagram showing a communication system 1000 according to an embodiment, and the communication system 1000 includes:
a User Equipment (UE) 1001, configured to perform any method for authorization revocation on the UE side as described above;
an API invoker 1002, configured to perform any method for authorization revocation on the API invoker side as described above;
an API Exposing Function (AEF) 1003, configured to perform any method for authorization revocation on the AEF side as described above; and
a Common API Framework (CAPIF) authentication/authorization function 1004, configured to perform any method for authorization revocation on the CAPIF authentication/authorization function side as described above.

Correspondingly, the present disclosure further provides an apparatus for authorization revocation, including:
a processor; and
a memory configured to store processor-executable instructions;
the processor is configured to execute any method for authorization revocation on the UE side as described above.

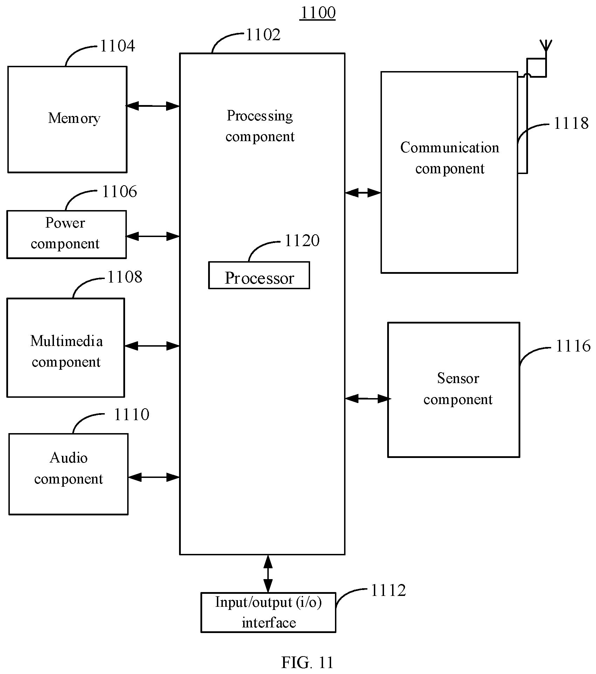

FIG. 11 is a block diagram showing an Application Program Interface (API) invoker apparatus according to an embodiment. For example, the apparatus 1100 may be a mobile phone, a computer, a digital broadcast terminal, a messaging device, a game console, a tablet device, a medical device, a fitness device, a personal digital assistant, or other UEs.

Referring to FIG. 11, the apparatus 1100 may include one or more of the following components: a processing component 1102, a memory 1104, a power component 1106, a multimedia component 1108, an audio component 1110, an input/output (I/O) interface 1112, a sensor component 1116 and a communication component 1118.

The processing component 1102 typically controls overall operations of the apparatus 1100, such as the operations associated with display, telephone calls, data communications, camera operations, and recording operations. The processing component 1102 may include one or more processors 1120 to execute instructions to perform all or part of the steps in the method described above. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

One of processors 1120 in the processing component 1102 may be configured to execute any method for invoking the Application Program Interface (API) on the terminal device side.

The memory 1104 is configured to store various types of data to support the operation of the apparatus 1100. Examples of such data include instructions for any application or method operated on the apparatus 1100, contact data, phonebook data, messages, pictures, video, etc. The memory 1104 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power component 1106 provides power to various components of the apparatus 1100. The power component 1106 may include a power management system, one or more power sources, and any other components associated with the generation, management, and distribution of power in the apparatus 1100.

The multimedia component 1108 includes a screen providing an output interface between the apparatus 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and/or the rear camera may receive an external multimedia datum while the apparatus 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone ("MIC") configured to receive an external audio signal when the apparatus 1100 is in an operation mode, such as a call mode, a recording mode, and a voice recognition mode. The received audio signal may be further stored in the memory 1104 or transmitted via the communication component 1118. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1116 includes one or more sensors to provide status assessments of various aspects of the apparatus 1100. For instance, the sensor component 1116 may detect an open/closed status of the apparatus 1100, relative locationing of components, e.g., the display and the keypad, of the apparatus 1100, a change in location of the apparatus 1100 or a component of the apparatus 1100, a presence or absence of the user contact with the apparatus 1100, an orientation or an acceleration/deceleration of the apparatus 1100, and a change in temperature of the apparatus 1100. The sensor component 1116 may include a proximity sensor configured to detect the presence of nearby objects without any physical contact. The sensor component 1116 may also include a light sensor, such as a CMOS or CCD image sensor, for use in imaging applications. In some embodiments, the sensor component 1116 may also include an accelerometer sensor, a gyroscope sensor, a magnetic sensor, a pressure sensor, or a temperature sensor.

The communication component 1118 is configured to facilitate communication, wired or wirelessly, between the apparatus 1100 and other devices. The apparatus 1100 can access a wireless network based on a communication standard, such as WIFI, 3G, 4G, 5G or 6G, or a combination thereof. In an example embodiment, the communication component 1118 receives a broadcast signal or broadcast associated information from an external broadcast management system via a broadcast channel. In an example embodiment, the communication component 1118 further includes a Near Field Communication (NFC) module to facilitate short-range communications. For example, the NFC module may be implemented based on a Radio Frequency Identification (RFID) technology, an Infrared Data Association (IrDA) technology, an Ultra-Wideband (UWB) technology, a Bluetooth (BT) technology, and other technologies.

In embodiments of the present disclosure, the apparatus 1100 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors, or other electronic components, for performing the method as described above.

In embodiments of the present disclosure, there is also provided a non-transitory computer readable storage medium including instructions, such as the memory 1104 including the instructions, executable by the processor 1120 in the apparatus 1100, for performing the method as described above. For example, the non-transitory computer readable storage medium may be a ROM, a RAM, a CD-ROM, a magnetic tape, a floppy disc, an optical data storage device, and the like.

Correspondingly, the present disclosure further provides an apparatus for authorization revocation, including:
a processor; and
a memory configured to store processor-executable instructions;
the processor is configured to execute any method for authorization revocation on the API invoker side as described above.

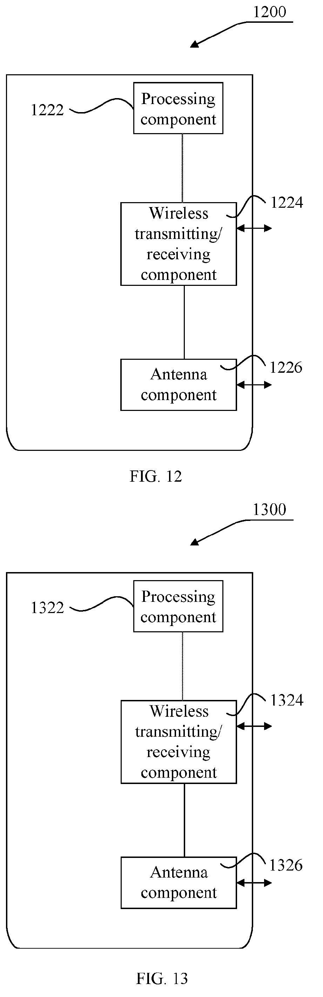

As shown in FIG. 12, FIG. 12 is a schematic structural diagram showing an apparatus 1200 for authorization revocation according to an embodiment. The apparatus 1200 may be provided as the API invoker. Referring to FIG. 12, the apparatus 1200 includes a processing component 1222, a wireless transmitting/receiving component 1224, an antenna component 1226, and a signal processing part specific to a wireless interface. The processing component 1222 may further include at least one processor.

One of processors in the processing component 1222 may be configured to perform any method for authorization revocation on the API invoker side as described above.

Correspondingly, the present disclosure further provides an apparatus for authorization revocation, including:
a processor; and
a memory configured to store processor-executable instructions;
the processor is configured to execute any method for authorization revocation on the AEF side as described above.

As shown in FIG. 13, FIG. 13 is a schematic structural diagram showing an apparatus 1300 for authorization revocation according to an embodiment. The apparatus 1300 may be provided as the AEF. Referring to FIG. 13, the apparatus 1300 includes a processing component 1322, a wireless transmitting/receiving component 1324, an antenna component 1326, and a signal processing part specific to a wireless interface. The processing component 1322 may further include at least one processor.

One of processors in the processing component 1322 may be configured to perform any method for authorization revocation on the AEF side as described above.

Correspondingly, the present disclosure further provides an apparatus for authorization revocation, including:
a processor; and
a memory configured to store processor-executable instructions;
the processor is configured to execute any method for authorization revocation on the CAPIF function side as described above.

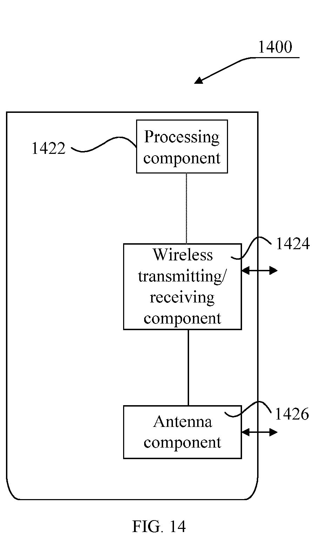

As shown in FIG. 14, FIG. 14 is a schematic structural diagram showing an apparatus 1400 for authorization revocation according to an embodiment. The apparatus 1400 may be provided as the CAPIF function. Referring to FIG. 14, the apparatus 1400 includes a processing component 1422, a wireless transmitting/receiving component 1424, an antenna component 1426, and a signal processing part specific to a wireless interface. The processing component 1422 may further include at least one processor.

One of processors in the processing component 1422 may be configured to perform any method for authorization revocation on the CAPIF function side as described above.

Other embodiments of the present disclosure will be apparent to those skilled in the art from consideration of the specification and practice of the present disclosure disclosed herein. The present application is intended to cover any variations, uses, or adaptations of the present disclosure, which are in accordance with the general principles of the present disclosure and include common general knowledge or conventional technical means in the art that are not disclosed in the present disclosure. The specification and embodiments are illustrative, and the real scope and spirit of the present disclosure is defined by the appended claims.

Other embodiments of the present disclosure will be apparent to those skilled in the art from consideration of the specification and practice of the present disclosure disclosed herein. The present application is intended to cover any variations, uses, or adaptations of the present disclosure, which are in accordance with the general principles of the present disclosure and include common general knowledge or conventional technical means in the art that are not disclosed in the present disclosure. The specification and embodiments are illustrative, and the real scope and spirit of the present disclosure is defined by the appended claims.

It should be understood that the present disclosure is not limited to the precise structures that have been described above and shown in the drawings, and various modifications and changes can be made without departing from the scope thereof. The scope of the present disclosure is limited only by the appended claims.

## Claims

1. A method for authorization revocation, performed by a User Equipment (UE), and comprising:
sending a first revocation request message to a Common API Framework (CAPIF) authentication/authorization function, wherein the first revocation request message is configured to request revocation of a specified authorization, and the specified authorization is an authorization corresponding to a target resource of the UE; and
receiving a first revocation response message returned by the CAPIF authentication/authorization function, wherein the first revocation response message is configured to indicate that the revocation of the specified authorization has been completed.

2. The method according to claim 1, wherein the first revocation request message comprises at least one of:
a token type for which authorization revocation is requested;
an identity of the CAPIF authentication/authorization function that issues a token;
an API invoker identity (ID);
an identity of a service API for which authorization revocation is requested;
an identity of a service for which authorization revocation is requested;
an identity of a service operation for which authorization revocation is requested;
an identity of a target resource for which authorization revocation is requested;
a target resource owner ID;
a geographic area for which authorization revocation is requested;
an API Exposing Function (AEF) identifier; or
a validity expiration time of authorization information.

3. The method according to claim 1, wherein the method further comprises:
performing mutual authentication with the CAPIF authentication/authorization function;
establishing a first secure connection with the CAPIF authentication/authorization function in a case where the mutual authentication with the CAPIF authentication/authorization function is passed.

4. The method according to claim 3, wherein performing the mutual authentication with the CAPIF authentication/authorization function comprises any one of:
performing the mutual authentication with the CAPIF authentication/authorization function based on a certificate;
performing the mutual authentication with the CAPIF authentication/authorization function based on a Generic Bootstrapping Architecture (GBA)-based authentication mechanism; or
performing the mutual authentication with the CAPIF authentication/authorization function based on an Authentication and Key Management for Applications (AKMA)-based authentication mechanism.

5. The method according to claim 4, wherein the certificate is assigned to the UE by the CAPIF authentication/authorization function.

6. The method according to claim 1, wherein sending the first revocation request message for requesting the revocation of the specified authorization to the Common API Framework (CAPIF) authentication/authorization function comprises:
establishing a first secure connection with the CAPIF authentication/authorization function, and sending the first revocation request message to the CAPIF authentication/authorization function through the first secure connection.

7. The method according to any one of claims 1 to 6, wherein:
the UE is a target resource owner; and/or
the CAPIF authentication/authorization function comprises a CAPIF core function or an authorization function.

8. A method for authorization revocation, performed by an API invoker, and comprising:
receiving a second revocation request message sent by a Common API Framework (CAPIF) authentication/authorization function, wherein the second revocation request message is configured to request revocation of a specified authorization, and the specified authorization is an authorization corresponding to a target resource of a User Equipment (UE);
deleting, based on the second revocation request message, authorization information corresponding to the target resource; and
sending a second revocation response message to the CAPIF authentication/authorization function, wherein the second revocation response message is configured to indicate that the authorization information has been deleted by the API invoker.

9. The method according to claim 8, wherein the second revocation request message comprises at least one of:
a token type for which authorization revocation is requested;
an identity of the CAPIF authentication/authorization function that issues a token;
an API invoker ID;
an identity of a service API for which authorization revocation is requested;
an identity of a service for which authorization revocation is requested;
an identity of a service operation for which authorization revocation is requested;
an identity of a target resource for which authorization revocation is requested;
a target resource owner ID;
a geographic area for which authorization revocation is requested;
an API Exposing Function (AEF) identifier; or
a validity expiration time of the authorization information.

10. The method according to claim 8, wherein a token type for which authorization revocation is requested in the second revocation request message is a refresh token and an access token, or the token type for which the authorization revocation is requested comprised in the second revocation request message is the access token; and/or
the authorization information comprises a token configured to obtain, modify or set the target resource.

11. The method according to claim 10, wherein deleting, based on the second revocation request message, the authorization information corresponding to the target resource comprises at least one of:
in response to the token type for which the authorization revocation is requested comprised in the second revocation request message being the refresh token and the access token, deleting a first token and a second token, wherein the token type of the first token is the refresh token, and the second token is associated with the first token and the token type of the second token is the access token; or
in response to a revoked token type comprised in the second revocation request message being the access token, deleting the second token, wherein the token type of the second token is the access token.

12. The method according to claim 11, wherein the first token and/or the second token deleted is a token that meets a requirement of the second revocation request message.

13. The method according to claim 8, wherein the method further comprises:
performing mutual authentication with the CAPIF authentication/authorization function; and
establishing a second secure connection with the CAPIF authentication/authorization function.

14. The method according to claim 13, wherein performing the mutual authentication with the CAPIF authentication/authorization function comprises any one of:
performing the mutual authentication with the CAPIF authentication/authorization function based on a certificate;
performing the mutual authentication with the CAPIF authentication/authorization function based on a Generic Bootstrapping Architecture (GBA)-based authentication mechanism; or
performing the mutual authentication with the CAPIF authentication/authorization function based on an Authentication and Key Management for Applications (AKMA)-based authentication mechanism.

15. The method according to claim 8, wherein receiving the second revocation request message for requesting the revocation of the specified authorization sent by the Common API Framework (CAPIF) authentication/authorization function comprises:
establishing a second secure connection with the CAPIF authentication/authorization function, and receiving the second revocation request message sent, through the second secure connection, by the CAPIF authentication/authorization function.

16. The method according to any one of claims 8 to 15, wherein the CAPIF authentication/authorization function comprises a CAPIF core function or an authorization function; and/or
the UE is a target resource owner.

17. A method for authorization revocation, performed by an API Exposing Function (AEF), and comprising:
receiving a third revocation request message sent by a Common API Framework (CAPIF) authentication/authorization function, wherein the third revocation request message is configured to request revocation of a specified authorization, and the specified authorization is an authorization corresponding to a target resource of a User Equipment (UE);
storing the third revocation request message; and
sending a third revocation response message to the CAPIF authentication/authorization function, wherein the third revocation response message is configured to indicate that the third revocation request message has been stored by the AEF.

18. The method according to claim 17, wherein the third revocation request message comprises at least one of:
a token type for which authorization revocation is requested;
an identity of the CAPIF authentication/authorization function that issues a token;
an API invoker identity (ID);
an identity of a service API for which authorization revocation is requested;
an identity of a service for which authorization revocation is requested;
an identity of a service operation for which authorization revocation is requested;
an identity of a target resource for which authorization revocation is requested;
a target resource owner ID;
a geographic area for which authorization revocation is requested;
an AEF identifier; or
a validity expiration time of authorization information.

19. The method according to claim 18, wherein the token type for which the authorization revocation is requested in the third revocation request message is an access token.

20. The method according to claim 19, wherein the method further comprises:
if a service API invocation request message sent by the API invoker is received, determining, according to the stored third revocation request message, whether a token carried in the service API invocation request message is valid, wherein the service API invocation request message is configured to request to obtain the target resource, and the token is configured to obtain, modify or set the target resource; and
if it is determined that the token is invalid, sending a service API invocation rejection message to the API invoker.

21. The method according to claim 20, wherein determining, according to the stored third revocation request message, whether the token carried in the service API invocation request message is valid comprises:
if the stored third revocation request message comprises information of the token carried in the service API invocation request message, determining that the token is invalid.

22. The method according to claim 17, wherein the method further comprises:
performing mutual authentication with an API invoker; and
establishing a third secure connection with the API invoker.

23. The method according to claim 20, wherein performing the mutual authentication with the API invoker comprises any one of:
performing the mutual authentication with the API invoker based on a certificate;
performing the mutual authentication with the API invoker based on a Generic Bootstrapping Architecture (GBA)-based authentication mechanism; or
performing the mutual authentication with the API invoker based on an Authentication and Key Management for Applications (AKMA)-based authentication mechanism.

24. The method according to claim 17, wherein the method further comprises:
establishing a third secure connection with an API invoker, and receiving a service API invocation request message sent, through the third secure connection, by the API invoker, wherein the service API invocation request message is configured to request to obtain the target resource.

25. The method according to any one of claims 17 to 24, wherein the CAPIF authentication/authorization function comprises a CAPIF core function or an authorization function; and/or
the UE is a target resource owner.

26. A method for authorization revocation, performed by a Common API Framework (CAPIF) authentication/authorization function, and comprising:
receiving a first revocation request message sent by a User Equipment (UE), wherein the first revocation request message is configured to request revocation of a specified authorization, and the specified authorization is an authorization corresponding to a target resource of the UE;
sending a second revocation request message to an API invoker, and sending a third revocation request message to an API Exposing Function (AEF);
receiving a second revocation response message returned by the API invoker, and receiving a third revocation response message returned by the AEF, wherein the second revocation response message is configured to indicate that authorization information corresponding to the target resource has been deleted by the API invoker, and the third revocation response message is configured to indicate that the third revocation request message has been stored by the AEF; and
sending a first revocation response message to the UE, wherein the first revocation response message is configured to indicate that the revocation of the specified authorization has been completed.

27. The method according to claim 26, wherein the first revocation request message comprises at least one of:
a token type for which authorization revocation is requested;
an identity of the CAPIF authentication/authorization function that issues a token;
an API invoker ID;
an identity of a service API for which authorization revocation is requested;
an identity of a service for which authorization revocation is requested;
an identity of a service operation for which authorization revocation is requested;
an identity of a target resource for which authorization revocation is requested;
a target resource owner ID;
a geographic area for which authorization revocation is requested;
an AEF identifier; or
a validity expiration time of the authorization information.

28. The method according to claim 26, wherein if a token type for which authorization revocation is requested comprised in the first revocation request message is a refresh token, a revoked token type comprised in the second revocation request message is the refresh token and an access token, and a revoked token type comprised in the third revocation request message is the access token; and
if the token type for which the authorization revocation is requested comprised in the first revocation request message is the access token, the revoked token type comprised in the second revocation request message is the access token, and the revoked token type comprised in the third revocation request message is the access token.

29. The method according to claim 28, wherein if the token type for which the authorization revocation is requested comprised in the first revocation request message is the refresh token, the second revocation request message is identical to the first revocation request message with respect to information except for the token type, and the third revocation request message is identical to the first revocation request message with respect to information except for the token type; and
if the token type for which the authorization revocation is requested comprised in the first revocation request message is the access token, information in the second revocation request message is the same as information in the first revocation request message, and information in the third revocation request message is the same as the information in the first revocation request message.

30. The method according to claim 26, wherein the method further comprises:
determining, based on an API invoker ID comprised in the first revocation request message, the API invoker by which the second revocation request message is received; and
determining, based on an AEF identifier comprised in the first revocation request message, the AEF by which the third revocation request message is received.

31. The method according to claim 26, wherein the method further comprises:
performing mutual authentication with the UE; and
establishing a first secure connection with the UE.

32. The method according to claim 30, wherein performing the mutual authentication with the UE comprises any one of:
performing the mutual authentication with the UE based on a certificate;
performing the mutual authentication with the UE based on a Generic Bootstrapping Architecture (GBA)-based authentication mechanism; or
performing the mutual authentication with the UE based on an Authentication and Key Management for Applications (AKMA)-based authentication mechanism.

33. The method according to claim 26, wherein receiving the first revocation request message for request the revocation of the specified authorization sent by the User Equipment (UE) comprises:
establishing a first secure connection with the UE, and receiving the first revocation request message sent, through the first secure connection, by the UE.

34. The method according to claim 26, wherein the method further comprises:
performing mutual authentication with the API invoker; and
establishing a second secure connection with the API invoker, in a case where the mutual authentication with the API invoker is passed.

35. The method according to claim 34, wherein performing the mutual authentication with the API invoker comprises any of:
performing the mutual authentication with the API invoker based on a certificate;
performing the mutual authentication with the API invoker based on a Generic Bootstrapping Architecture (GBA)-based authentication mechanism; or
performing the mutual authentication with the API invoker based on an Authentication and Key Management for Applications (AKMA)-based authentication mechanism.

36. The method according to claim 26, wherein sending the first revocation request message to the API invoker, respectively comprises:
establishing a second secure connection with the API invoker, and sending the first revocation request message to the API invoker through the second secure connection.

37. The method according to any one of claims 26 to 36, wherein the CAPIF authentication/authorization function comprises a CAPIF core function or an authorization function; and/or
the UE is a target resource owner.

38. An apparatus for authorization revocation, applied to a User Equipment (UE), and comprising:
a first sending module, configured to send a first revocation request message to a Common API Framework (CAPIF) authentication/authorization function, wherein the first revocation request message is configured to request revocation of a specified authorization, and the specified authorization is an authorization corresponding to a target resource of the UE; and
a first receiving module, configured to receive a first revocation response message returned by the CAPIF authentication/authorization function, wherein the first revocation response message is configured to indicate that the revocation of the specified authorization has been completed.

39. An apparatus for authorization revocation, applied to an API invoker, and comprising:
a second receiving module, configured to receive a second revocation request message sent by a Common API Framework (CAPIF) authentication/authorization function, wherein the second revocation request message is configured to request revocation of a specified authorization, and the specified authorization is an authorization corresponding to a target resource of a User Equipment (UE);
a deleting module, configured to delete, based on the second revocation request message, authorization information corresponding to the target resource; and
a second sending module, configured to send a second revocation response message to the CAPIF authentication/authorization function, wherein the second revocation response message is configured to indicate that the authorization information has been deleted by the API invoker.

40. An apparatus for authorization revocation, applied to an API Exposing Function (AEF), and comprising:
a third receiving module, configured to receive a third revocation request message sent by a Common API Framework (CAPIF) authentication/authorization function, wherein the third revocation request message is configured to request revocation of a specified authorization, and the specified authorization is an authorization corresponding to a target resource of a User Equipment (UE);
a storing module, configured to store the third revocation request message; and
a third sending module, configured to send a third revocation response message to the CAPIF authentication/authorization function, wherein the third revocation response message is configured to indicate that the third revocation request message has been stored by the AEF.

41. An apparatus for authorization revocation, applied to a Common API Framework (CAPIF) authentication/authorization function, and comprising:
a fourth receiving module, configured to receive a first revocation request message sent by a User Equipment (UE), wherein the first revocation request message is configured to request revocation of a specified authorization, and the specified authorization is an authorization corresponding to a target resource of the UE;
a fourth sending module, configured to send a second revocation request message to an API invoker, and send a third revocation request message to an API Exposing Function (AEF);
a fifth receiving module, configured to receive a second revocation response message returned by the API invoker, and receive a third revocation response message returned by the AEF, wherein the second revocation response message is configured to indicate that authorization information corresponding to the target resource has been deleted by the API invoker, and the third revocation response message is configured to indicate that the third revocation request message has been stored by the AEF; and
a fifth sending module, configured to send a first revocation response message to the UE, wherein the first revocation response message is configured to indicate that the revocation of the specified authorization has been completed.

42. A communication system, comprising:
a User Equipment (UE), configured to perform the method for authorization revocation according to any one of claims 1 to 7;
an API invoker, configured to perform the method for authorization revocation according to any one of claims 8 to 16;
an API Exposing Function (AEF), configured to perform the method for authorization revocation according to any one of claims 17 to 25; and
a Common API Framework (CAPIF) authentication/authorization function, configured to perform the method for authorization revocation according to any one of claims 26 to 37.

43. An apparatus for authorization revocation, comprising:
a processor; and
a memory configured to store processor-executable instructions;
wherein the processor is configured to execute the method for authorization revocation according to any one of claims 1 to 7.

44. An apparatus for authorization revocation, comprising:
a processor; and
a memory configured to store processor-executable instructions;
wherein the processor is configured to execute the method for authorization revocation according to any one of claims 8 to 16.

45. An apparatus for authorization revocation, comprising:
a processor; and
a memory configured to store processor-executable instructions;
wherein the processor is configured to execute the method for authorization revocation according to any one of claims 17 to 25.

46. An apparatus for authorization revocation, comprising:
a processor; and
a memory configured to store processor-executable instructions;
wherein the processor is configured to execute the method for authorization revocation according to any one of claims 26 to 37.
